# NEUE EUROPÄISCHE PATENTSCHRIFT

(11) **EP 0 891 885 B2**
(45) Veröffentlichungstag und Bekanntmachung des Hinweises auf die Entscheidung über den Einspruch: **12.04.2006**
(45) Hinweis auf die Patenterteilung: 20.11.2002
(21) Anmeldenummer: 98113062.8
(22) Anmeldetag: 14.07.1998
(51) Int. Cl.: B60H 1/00

(54) **Kraftfahrzeug mit einer Brennkraftmaschine und einer Anlage zur Temperierung des Fahrgastinnenraumes**
Vehicle with an internal combustion engine and device for temperature controlling of the interior of a vehicle
Véhicule à moteur à combustion interne et dispositif pour tempérer la température dans l'habitacle d'un véhicule automobile

(30) Priorität: 19.07.1997 DE 19731071
(43) Veröffentlichungstag der Anmeldung: 20.01.1999
(73) Patentinhaber: ADAM OPEL AG, 65423 Rüsselsheim (DE)
(72) Erfinder: Jobst, Wolfgang, Dipl.-Ing., 64569 Nauheim (DE); Weber, Volker, Dipl.-Ing., 55437 Appenheim (DE)
(74) Vertreter: Daniel, Ulrich W.P.

(56) Entgegenhaltungen:
- DE-A- 2 848 417
- DE-A- 3 704 182
- DE-A- 19 510 110
- US-A- 5 644 929
- PATENT ABSTRACTS OF JAPAN vol. 008, no. 160 (M-312), 25. Juli 1984 (1984-07-25) & JP 59 057012 A (NIPPON DENSO KK), 2. April 1984 (1984-04-02)
- PATENT ABSTRACTS OF JAPAN vol. 015, no. 194 (M-1114), 20. Mai 1991 (1991-05-20) & JP 03 050019 A (MITSUBISHI ELECTRIC CORP), 4. März 1991 (1991-03-04)
- Betriebsanleitung BMW der 7er - Reihe, 1994 BMW AG

## Beschreibung

Die Erfindung bezieht sich auf ein Kraftfahrzeug mit einer Brennkraftmaschine und mit einer Anlage zur Temperierung des Fahrzeuginnenraumes, wobei auch bei abgestellter Brennkraftmaschine eine Aufheizung des Fahrzeuginnenraumes bei Nutzung von Restwärme möglich ist.

Restwärme kann sowohl von einem erwärmten Wärmetauscher als auch zusätzlich von der Brennkraftmaschine dem Fahrzeuginnenraum zugeführt werden, wobei die Restwärme des Kühlmittels der Brennkraftmaschine nur nutzbar ist, wenn eine elektrische Kühlmittel-Umwälzpumpe vorgesehen wird, die das Kühlmittel bei abgestellter Brennkraftmaschine durch den Wärmetauscher pumpt.

Derartige Kraftfahrzeuge sind aus der DE-A-28 48 417 und aus der Praxis (BMW 5er Reihe; Mercedes-Benz E-Klasse) bekannt. Von besonderem Vorteil ist, daß es auch bei abgestelltem Motor möglich ist, den Fahrzeuginnenraum noch eine Zeitlang warmzuhalten. Der Komfort für im Fahrzeug wartende Insassen ist im Winter deutlich gegenüber Fahrzeugen ohne diese Ausstattung verbessert.

Als Alternativlösung sind Zuheiz- oder Standheizgeräte bekannt, die ihre Energie aus mitgeführtem Kraftstoff beziehen, jedoch relativ hohe Anschaffungskosten verursachen. Es ist Aufgabe der Erfindung, den insassenkomfort noch weiterzu verbessern und mit einfachen Mitteln ein Kraftfahrzeug zu schaffen, das bei minimalen Bedienaufwand auch im abgestellten Zustand einen wohltemperierten Innenraum bietet.

Zur Lösung dieser Aufgabe zeichnet sich das erindungsgemäße Kraftfahrzeug durch alle im Patentanspruch 1 angegebenen Merkmale aus. Einzelheiten ergeben sich aus den Patentansprüchen 2 bis 5.

Ist das Kraftfahrzeug mit einer automatisch und/oder manuell gesteuerten Heizungs-/Klimaanlage ausgestattet, ist einerseits zumindest ein Wärmetauscher zur Lufterwärmung vorgesehen und andererseits zumindest ein Verdampfer im Kraftfahrzeug angeordnet, der Luft abkühlt, trocknet und auch reinigt. Es hängt von der Einstellung der Anlage ab, wieviel Luft über den Wärmetauscher und/oder den Verdampfer in den Fahrzeuginneraum geleitet wird. Es wird vorgeschlagen, ein Stellelement im Fahrzeuginnenraum vorzusehen, bei dessen Betätigung eine selbsttätige optimierte Zuführung entweder von Restwärme des Wärmetauschers oder von Restkälteleistung des Verdampfers in den Fahrzeuginnenraum erfolgt. Dabei wird von der letzten Einstellung der Anlage vor dem Abstellen der Brennkraftmaschine des Fahrzeugs ausgegangen. War die Anlage In der Betriebsart "Heizbetrieb" (unabhängig vom eingestellten Grad der Aufheizung) wird Luft ausschließlich über den Wärmetauscher in den Fahrzeuginnenraum geleitet, so daß seine Restwärme maximal genutzt wird. War die Anlage andererseits in der Betriebsart "Kühlbetrieb" aktiv, wird die Luft ausschließlich über den Verdampfer in den Fahrzeuginnenraum gefördert.

In Abhängigkeit von den jeweiligen aktuell bestehenden Bedingungen kann eine Frischluft/Umluftklappe zur weiteren Optimierung der Aufwärmung/Abkühlung verstellt werden, wie dies im Patentanspruch 3 angesprochen ist.

Zur Optimierung des Betriebes der Anlage werden auch bei Stillstand der Brennkraftmaschine an sich bekannte Sensor-Meßwerte in die Steuerung einbezogen. Meßwerte
- zur Erfassung der letzten Einstellung der Anlage vor dem Abstellen der Brennkraftmaschine,
- zur Erfassung der Innenraumtemperatur,
- zur Erfassung der Temperatur an zumindest einem Luftauslaß sowie
- zur Erfassung der Außentemperatur
können Berücksichtigung finden. Auf Basis dieser Werte ist nicht nur die Frischluft-/Umluftklappe steuerbar, sondern der Betrieb der Anlage kann auch selbsttätig beendet werden, wenn die Restenergie (Wärme oder Kälte) verbraucht ist.

Die Anlage ist des weiteren abzustellen, wenn die elektrische Spannung des Bordnetzes geringer als ein Grenzwert ist.

Die Bedienung der Anlage ist für die Fahrzeuginsassen denkbar einfach und ohne Bezugnahme auf eine Zeichnung zu erläutem. Ein Stellelement, beispielsweise eine Taste "Rest", wird betätigt, um die Übertragung der Restenergie in den Fahrzeuginnenraum zu starten. Ist die Brennkraftmaschine des Fahrzeugs noch in Betrieb, so bleibt die Tastenbestätigung wirkungslos - sie ist also an das Zündsignal gekoppelt.

Beim Abstellen des Motors werden die Einstellungen der Heizungs-/Klimaanlage in einem elektronischen Speicher abgespeichert. Sie werden von Sensoren bekannter Art erfaßt. Insbesondere die Stellung von Luftmischklappen, welche die dem Fahrzeuginnenraum zuzuführende Luft über einen von Kühlwasser durchflossenen Wärmetauscher und/oder an diesem vorbei sowie über einen Verdampfer und/oder an diesem vorbei leiten, wird erfaßt. Bei betätigter "Rest"-Taste analysiert ein Prozessor die letzte Einstellung der Anlage und gibt einen Befehl. "Heizen" aus, wenn die Anlage vornehmlich im Heizbetrieb aktiv war, oder gibt einen Befehl "Kühlen" aus, wenn die Anlage vornehmlich im Kühlbetrieb gearbeitet hat. Abhängig von diesem Befehl wird die Anlage bei Stillstand der Brennkraftmaschine neu eingestellt. Die Luft wird entweder nur über den Wärmetauscher geleitet, ohne das Kaltluft über einen Bypaß in den Innenraum geleitet wird, oder die Luft wird über den Verdampfer und vollständig an dem Wärmetauscher vorbei in den Innenraum gefördert.

Eine Analyse von Temperatur-Sensorwerten erfolgt während des Betriebs der Anlage, so daß eine selbsttätige Abschaltung erfolgen kann, wenn die Rest-energie verbraucht ist. Beim Heizen wird abgeschaltet, wenn die dem Innenraum zugeführte Luft eine Temperatur hat, die gleich oder kleiner der Innenraumtemperatur ist. Beim Kühlen wird der "Rest"-Betrieb beendet, wenn die zugeführte Luft eine Temperatur aufweist, die gleich oder größer der Innenraumtemperatur ist.

Des weiteren ist es möglich, eine an sich bekannte Frischluft-/Umluftklappe in die Steuerung einzubeziehen. Ist die Außentemperatur höher als die Innenraumtemperatur sollte die Klappe beim Kühlen geschlossen werden (Umlufteinstellung). Ist die Außentemperatur hingegen geringer als die Innenraumtemperatur sollte die Frischluft/Umluftklappe beim Heizen auf Umluft gestellt werden.

Sind Luftverteilelemente der Anlage elektrisch verstellbar, kann beim "Rest"-Betrieb eine optimierte Einstellung vorgenommen werden. Beispielsweise kann Warmluft beim Heizen in den Fußraum und Kaltluft beim Kühlen in den Kopfraum gefördert werden. Gleichfalls erfolgt eine optimierte Einstellung der Leistung eines Gebläses der Anlage.

Zur Ausführung der beschriebenen Steuerungsfunktionen sind kaum zusätzliche Elemente in bekannten Anlagen einzusetzen. Das Stellelement "Rest" ist vorzugsweise in der Amaturentafel anzuordnen, und unter Umständen ist ein zusätzlicher Speicher zur Speicherung der letzten Anlageeinstellungen vorzusehen. Die Steuerungsfunktionen können von vorhandenen Steuergeräten der Anlage ausgeführt werden, und die Sensoren zur Erfassung der genannten Eingangsdaten sind bei modernen Heizungs-/Klimaanlagen vorhanden.

Da die Anlage im "Rest"-Betrieb vom elektrischen Bordnetz betrieben wird, ist eine vorzugsweise selbsttätige Beachtung der zur Verfügung stehenden Bordspannung vonnöten. Hiervon ist auch abhängig, ob eine gegebenenfalls vorhandene elektrische Wasserpumpe oder ein elektrisch antreibbarer Kompressor der Klimaanlage einzubeziehen ist.

## Patentansprüche

1. Kraftfahrzeug mit einer Brennkraftmaschine und einer Anlage zur Temperierung des Fahrzeuginnenraumes, die derart ausgelegt ist, daß auch bei abgestellter Brennkraftmaschine eine Aufheizung des Fahrzeuginnenraumes bei Nutzung von Restwärme möglich ist, **dadurch gekennzeichnet, daß** die Anlage in an sich bekannter Weise als Heizungs- und Klimaanlage zum automatisch und/oder manuell gesteuerten Aufheizen oder Abkühlen des Fahrzeuginnenraumes ausgelegt ist und daß ein Stellelement im Fahrzeuginnenraum vorgesehen ist, bei dessen Betätigung, abhängig von der letzten Einstellung der Heizungs- und Klimaanlage, eine selbsttätig optimierte Zuführung der Restwärme zumindest eines Wärmetauschers oder der Restkälteleistung zumindest eines in den Verdampfers Fahrzeuginnenraum erfolgt.

2. Kraftfahrzeug nach Anspruch 1, **dadurch gekennzeichnet, daß** die Anlage zur Temperierung des Fahrzeuginnenraumes Sensoren
- zur Erfassung zumindest der vor dem Abstatten der Brennkraftmaschine letzten Einstellungen der Anlage,
- zur Erfassung der Temperatur des Fahrzeuginnenraumes und
- zur Erfassung der Lufttemperatur an zumindest einem Luftauslaß
aufweist, daß die Anlage bei Betätigen des Stellelementes und Stillstand der Brennkraftmaschine, abhängig von ihren letzten erfaßten Einstellungen, entweder auf reinen Heizbetrieb oder auf reinen Kühlbetrieb eingestellt wird und in dieser Betriebsart arbeitet bis
- das Stellelement erneut betätigt wird oder
- bei Heizbetrieb die Temperatur am Luftauslaß gleich oder kleiner der Temperatur im Fahrzeuginnenraum ist oder
- bei Kühlbetrieb die Temperatur am Luftauslaß gleich oder größer der Temperatur im Fahrzeuginnenraum ist.

3. Kraftfahrzeug nach Anspruch 2, **gekennzeichnet durch** einen Sensor zur Erfassung der Außentemperatur und **durch** eine Frischluft-/Umluftklappe, wobei bei Betätigen des Stellelements die Frischluft-/Umluftklappen selbsttätig, abhängig vom Verhältnis zwischen der Außentemperatur und der Temperatur im Fahrzeuginnenraum, verstellbar wird,
- bei Heizbetrieb und einer Außentemperatur, die deutlich geringer ist als die Innentemperatur und
- bei Kühlbetrieb und einer Außentemperatur, die deutlich höher ist als die Innenraumtemperatur.

4. Kraftfahrzeug nach einem der Ansprüche 1 bis 3, **dadurch gekennzeichnet, daß** die Anlage zum Temperieren, des Fahrzeuginnenraumes automatisch abschaltet, wenn die im Kraftfahrzeug zur Verfügung stehende elektrische Spannung unter einen Grenzwert fällt.

5. Kraftfahrzeug nach einem der Ansprüche 1 bis 4, **dadurch gekennzeichnet, daß** dem Heizbetrieb und dem Kühlbetrieb bei Stillstand der Brennkraftmaschine bestimmte Einstellungen eines Lüfters und von Luft verteilungsklappen zugeordnet sind, die bei Betätigen des Stellelementes selbsttätig eingestellt werden.

## Claims

1. Motor vehicle with an internal combustion engine and a system for temperature control of the vehicle interior, which is designed in such a way that, even when the engine is turned off, heating of the vehicle interior using residual heat is possible, **characterised in that** the system is designed in a manner known in the art as a heating and air conditioning system for automatically and/or manually controlled heating or cooling of the vehicle interior and **in that** in the vehicle interior is provided a control element upon whose actuation, depending on the last setting of the heating and air conditioning system, automatically optimised delivery of the residual heat of at least one heat exchanger or of the residual refrigerating capacity of at least one evaporator to the vehicle interior is effected.

2. Motor vehicle according to claim 1, **characterised in that** the system for temperature control of the vehicle interior comprises sensors
- for detecting at least the last settings of the system before turning off the engine,
- for detecting the temperature of the vehicle interior and
- for detecting the air temperature at at least one air outlet,
**in that** the system, upon actuation of the control element and stopping of the engine, depending on its last detected settings, is set either to pure heating mode or to pure cooling mode and works in this manner of operation until
- the control element is actuated again or
- in heating mode the temperature at the air outlet is equal to or less than the temperature in the vehicle interior or
- in cooling mode the temperature at the air outlet is equal to or greater than the temperature in the vehicle interior.

3. Motor vehicle according to claim 2, **characterised by** a sensor for detection of the outside temperature and by a fresh air/circulating air flap, wherein upon actuation of the control element the fresh air/circulating air flap becomes displaceable automatically, depending on the ratio between the outside temperature and the temperature in the vehicle interior,
- in heating mode and at an outside temperature which is much lower than the inside temperature and
- in cooling mode and at an outside temperature which is much higher than the inside temperature.

4. Motor vehicle according to any of claims 1 to 3, **characterised in that** the system for temperature control of the vehicle interior switches off automatically when the voltage available in the motor vehicle falls below a limit value.

5. Motor vehicle according to any of claims 1 to 4, **characterised in that** associated with the heating mode and the cooling mode when the engine has stopped are certain settings of a fan and of air distribution valves which are set automatically upon actuation of the control element.

## Revendications

1. Véhicule automobile comportant un moteur à combustion interne ainsi qu'une installation pour tempérer l'habitacle, agencée de manière à permettre un chauffage de l'habitacle, même lorsque le moteur est arrêté, en utilisant de la chaleur résiduelle, **caractérisé en ce que** l'installation, d'une manière connue en soi, est agencée sous forme d'installation de chauffage et de climatisation pour le chauffage ou le rafraîchissement automatique et/ou manuel de l'habitacle et **en ce qu'**il est prévu, à l'intérieur de l'habitacle, un élément de commande par l'actionnement duquel, en fonction du dernier réglage de l'installation de chauffage et de climatisation, un apport optimisé de la chaleur résiduelle d'au moins un échangeur de chaleur ou du froid résiduel d'au moins un évaporateur a lieu dans l'habitacle.

2. Véhicule automobile selon la revendication 1, **caractérisé en ce que** l'installation pour tempérer l'habitacle d'un véhicule comprend des détecteurs
- pour détecter au moins les derniers réglages de l'installation avant l'arrêt du moteur,
- pour mesurer la température de l'habitacle,
- pour mesurer la température de l'air au niveau d'au moins une sortie d'air,
**en ce que** l'installation, lorsqu'on actionne l'élément de commande et que le moteur est arrêté, en fonction des derniers réglages qu'elle a détectés, est commutée soit en mode de chauffage pur, soit en mode de refroidissement pur et travaille dans ce mode
- jusqu'à ce qu'on actionne de nouveau l'élément de commande ou,
- en mode de chauffage, jusqu'à ce que la température au niveau de la sortie d'air soit égale ou inférieure à la température à l'intérieur de l'habitacle ou,
- en mode de refroidissement, jusqu'à ce que la température au niveau de la sortie d'air soit égale ou supérieure à la température à l'intérieur de l'habitacle.

3. Véhicule automobile selon la revendication 2, **caractérisé par** un détecteur pour mesurer la température extérieure et par un volet d'air frais/air recyclé, le volet d'air frais/air recyclé, lors de l'actionnement de l'élément de commande, étant réglé automatiquement en fonction du rapport de la température extérieure à la température de l'habitacle
- en mode de chauffage et pour une température extérieure qui est nettement inférieure à la température intérieure et
- en mode de refroidissement et pour une température extérieure qui est nettement supérieure à la température intérieure.

4. Véhicule automobile selon une des revendications 1 à 3, **caractérisé en ce que** l'installation pour tempérer l'habitacle se coupe automatiquement lorsque la tension électrique disponible à bord du véhicule chute en-dessous d'une valeur seuil.

5. Véhicule automobile selon une des revendications 1 à 4, **caractérisé en ce qu'**au mode de chauffage et au mode de refroidissement, lorsque le moteur est à l'arrêt, sont associés des réglages particuliers d'un ventilateur et de volets de répartition d'air, qui sont sélectionnés de manière automatique lors de l'actionnement de l'élément de commande.
